# Europäisches Patentamt
# European Patent Office
# Office européen des brevets

(19)

(11) Veröffentlichungsnummer: **0 111 647**
**B1**

(12) **EUROPÄISCHE PATENTSCHRIFT**

(45) Veröffentlichungstag der Patentschrift:
26.11.86

(21) Anmeldenummer: 83109419.8

(22) Anmeldetag: 22.09.83

(51) Int. Cl.⁴: **F 16 K 31/365**, F 15 C 3/04, G 05 D 16/16

(54) Ventileinrichtung.

(30) Priorität: 20.12.82 DE 3247071

(43) Veröffentlichungstag der Anmeldung:
27.06.84 Patentblatt 84/26

(45) Bekanntmachung des Hinweises auf die Patenterteilung:
26.11.86 Patentblatt 86/48

(84) Benannte Vertragsstaaten:
DE GB NL

(56) Entgegenhaltungen:
EP-A-0 022 916
AT-A-213 676
DE-A-1 523 493
DE-A-1 958 364
US-A-645 722
US-A-2 990 852

Dubbel,Taschenbuch für den
Maschinenbau,Springer Verlag 1981,Seiten 389,390

(73) Patentinhaber: WABCO Westinghouse
Steuerungstechnik GmbH & Co., Bartweg 13
Postfach 91 12 70, D-3000 Hannover 91 (DE)

(72) Erfinder: Kemner, Axel, Dahlienweg 8, D-3004
Isernhagen 1 (DE)
Erfinder: Bachmann, Wilhelm, Am Lienkamp 9,
D-3012 Langenhagen (DE)

(74) Vertreter: Schrödter, Manfred, WABCO
Westinghouse Fahrzeugbremsen GmbH Am
Lindener Hafen 21 Postfach 91 12 80, D-3000
Hannover 91 (DE)

## Beschreibung

Die Erfindung betrifft eine Ventileinrichtung, insbesondere ein Regelventil, gemäß dem Oberbegriff des Patentanspruchs 1.

Derartige, mit einem Regelkolben versehene Ventileinrichtungen werden überall dort eingesetzt, wo in Abhängigkeit von einem Steuerdruck ein proportionaler Druck ausgesteuert werden soll. Es ist möglich, diese Ventileinrichtungen je nach Auslegung der Wirkflächen des Regelkolbens als Druckverstärker, als Druckreduzierventil oder auch als Relaisventil mit einer Drucksteuerung im Verhältnis von 1 : 1 zwischen Steuerdruck und ausgesteuertem Druck einzusetzen. Der Regelkolben kann aus Metall gefertigt sein und in einer Führungsbohrung mittels Dichtringen abgedichtet geführt werden.

Eine solche Kolbenausbildung und -Abdichtung hat jedoch normalerweise den Nachteil, daß die Ventileinrichtung, bedingt durch die Reibung der handelsüblichen Dichtelemente, eine relativ große Hysterese hat.

Um diesen Nachteil zu vermeiden, ist es möglich, den Regelkolben als Membrankolben, welcher aus einer Membran oder auch aus zwei Membranen bestehen kann, auszubilden. Eine Ventileinrichtung der eingangs genannten Art mit einem aus zwei Membranen gebildeten Membrankolben ist z. B. aus der DE-A- 1 523 493 bekannt.

Der Membrankolben dieser Ventileinrichtung besteht aus einer ersten einfachen, vom Steuerdruck beaufschlagbaren Membran und einer als Rollmembran ausgebildeten, vom Ausgangsdruck beaufschlagbaren zweiten Membran. Der Membrankolben dient zur Betätigung eines kombinierten Einlaß- und Auslaßventils.

Bei aus einer einfachen Membran bestehenden oder auch aus zwei Membranen gebildeten Membrankolben, welche mit einem Ventil zusammenwirken, tritt das Problem auf, daß die vom Druckmittel erzeugten Schwingungen des Membrankolbens auf das Ventil übertragen werden, was zu einem Flattern des Ventils führen kann. Die Folge können eine ungenaue Druckregelung und Beschädigungen der Ventileinrichtung sein.

Die Übertragung der erzeugten Schwingungen kann durch dämpfungsfähige Mittel verhindert werden. Zu den dämpfungsfähigen Mitteln können auch mechanische Federn gezählt werden. Eine solche Ventileinrichtung, deren Kolben gegen eine Metallspiralfeder betätigt wird, ist z. B. aus der DE-A- 1 958 364 bekannt. Allerdings ist bei Metallfedern die Werkstoffdämpfungsfähigkeit verhältnismäßig gering, so daß sie vernachlässigt werden kann, deshalb ist eine wirksame Schwingungsdämpfung nicht erreichbar.

Der Erfindung liegt die Aufgabe zugrunde, eine Ventileinrichtung der eingangs genannten Art zu schaffen, bei welcher Schwingungen des Kolbens, insbesondere des als Membrankolben, ausgebildeten Kolbens weitgehendst vermieden werden.

Diese Aufgabe wird mit der im Patentanspruch 1 angegebenen Erfindung gelöst. Weiterbildungen und vorteilhafte Ausgestaltungen der Erfindung sind in den Unteransprüchen aufgezeigt.

Die Erfindung bietet insbesondere den Vorteil, mit einfachen Mitteln eine Dämpfung der Schwingungen des Kolbens und der Bewegung des mit dem Kolben in Wirkverbindung stehenden Ventilkörpers zu erzielen. Wiel die Dämpfungsmittel gleichzeitig als Entlüftungsrohr für die Ventileinrichtung ausgebildet sind, kann auf eine zusätzliche Druckmittelauslaßkammer und die erforderlichen Dichtmittel verzichtet werden.

Durch die vorteilhafte Anordnung der schwingungsdämpfenden Mittel in der Druckmittelausgangskammer und/oder in der Steuerkammer kann auf einfache Weise sichergestellt werden, daß das steuernde oder ausgesteuerte Druckmittel keine solchen Kräfte auf die schwingungsdämpfenden Mittel ausübt, die auf die Ventile nachteilig, z.B. im Sinne einer Schwingungserzeugung wirken.

Es ist dabei lediglich darauf zu achten, daß die schwingungsdämpfenden Mittel nicht einseitig von einem Druckmittel beaufschlagt werden.

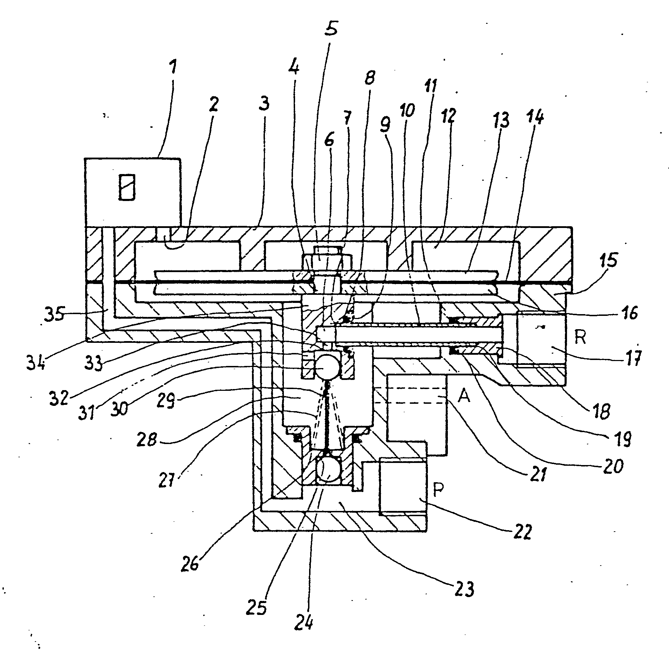

Anhand der Abbildung wird nachstehend ein Ausführungsbeispiel der Erfindung näher erläutert.

Die Abbildung zeigt eine als Proportionalventil ausgebildete Ventileinrichtung mit einem als Dämpfungsglied ausgebildeten Entlüftungsrohr im Schnitt.

In einem Ventilgehäuse, welches aus einem Gehäuseoberteil 3 und einem Gehäuseunterteil 15 besteht, ist ein Membrankolben 13, 14, 16 angeordnet. Der Membrankolben l3, 14, 16 besteht aus einer Membran 14, welche zwischen dem Gehäuseoberteil 3 und dem Gehäuseunterteil 15 eingespannt ist, und zwei die Membran 14 verstärkenden Metallscheiben 13, 16. Der Membrankolben 13, 14, 16 trennt eine mit einem Steueranschluß 2 versehene Steuerkammer 12 von einer mit einem Druckmittelausgang 21 versehenen Druckmittelausgangskammer 28. Durch eine im Membrankolben 13, 14, 16 zentrisch angeordnete Ausnehmung ist der abgestufte Teil 4 eines Ventilstößels 34 hindurchgeführt. Der Ventilstößel 34, 4 ist mittels einer auf den abgestuften Teil 4 aufgeschraubten Mutter 5 mit dem Membrankolben 13, 14, 16 lösbar verbunden.

Im Ventilstößel 34, 4 ist eine in Richung der Längsachse des Ventilstößels 34, 4 verlaufende abgestufte Ausnehmung vorgesehen in welcher ein Ventilverschlußkörper 30 gelagert ist. Der Ventilverschlußkörper 30 bildet mit einer als Ventilsitz 32 dienenden Abstufung der Ausnehmung 32, 33 ein Auslaßventil 30, 32, 33. Über eine im Ventilstößel 34, 4 vorgesehene Querbohrung 31, das Auslaßventil 30, 32, 33 sowie ein mit dem Auslaßventil 30, 32, 33 verbundenes Entlüftungsrohr 10 ist die Druckmittelausgangskammer 28 mit der Atmosphäre verbindbar. Das Entlüftungsrohr 10 ist mit seinem einen Ende in einer im Ventilstößel 34, 4 angeordneten abgestuften Querbohrung 6, 7 gelagert, welche an den Ausgang 33 des Auslaßventils 30, 32, 33 anschließt.

Ein in der Abstufung 7 der Querbohrung 6, 7 angeordneter, das Entlüftungsrohr 10 umschließender Dichtring 8 wird von einer ringförmigen Scheibe 9 unter Vorspannung in der Abstufung 7 gehalten. Die abgestufte als Ventilkammer·dienende Querbohrung 6, 7 ist so bemessen, daß das Entlüftungsrohr 10 um einen geringen Betrag verschwenkbar ist.

Das andere Ende des Entlüftungsrohres 10 ist in einer Abstufung 19 einer Buchse 18 gelagert, die in einem Druckmittelauslaß 17 angeordnet ist. Ein unter Vorspannung zwischen der Buchse 18 und einem stirnseitigen Anschlag 11 des Druckmittelauslasses 17 gehaltener Dichtring 20, welcher das Entlüftungsrohr 10 umschließt, ist das Entlüftungsrohr 10 elastisch gelagert.

Der erste Ventilverschlußkörper 30 ist über eine Stange 29 mit einem zweiten Ventilverschlußkörper 24 verbunden, welcher mit einem gehäusefesten Ventilsitz 25 ein Einlaßventil 24, 25 bildet, über welches die Druckmittelausgangskammer 28 mit einer Druckmitteleingangskammer 23 verbindbar ist. Die Druckmitteleingangskammer 23 steht über einen Druckmitteleingang 22 mit einer Druckmittelquelle in Verbindung. Eine Druckfeder 27 stützt sich auf einem Absatz 26 der Venilgehäusebohrung ab und beaufschlagt den Ventilverschlußkörper 30 des Auslaßventils 30, 32, 33 in Richtung auf den Ventilsitz 32 des Auslaßventils zu, wodurch das Einlaßventil 24, 25 über die Stange 29 in der Schließstellung gehalten wird. Die Druckmitteleingangskammer 23 ist über einen Kanal 35 und ein Magnetventil 1, welches von einer nicht dargestellten Regelelektronik ansteuerbar ist, mit der Steuerkammer 12 verbindbar.

Wird über den Druckmitteleingang 22, die Druckmitteleingangskammer 23, den Kanal 35 und das Magnetventil 1 sowie den Steueranschluß 2 der Steuerkammer 12 Steuerdruck zugeführt, so bewirkt der sich in der Steuerkammer 12 aufbauende Druck eine Bewegung des Membrankolbens 13, 14, 16 in Richtung auf die Druckmittelausgangskammer 28 zu. Der Ventilsitz 32 setzt auf den Ventilverschlußkörper 30 des Auslaßventils 30, 32, 33 auf. Das Auslaßventil ist dann geschlossen. Bei der weiteren Abwärtsbewegung des Membrankolbens 13, 14, 16 wird der Ventilverschlußkörper 24 vom Ventilsitz 25 des Einlaßventils 24, 25 abgehoben. Von der Druckmitteleingangskammer 23, das dann geöffnete Einlaßventil 24, 25 sowie die Druckmittelausgangskammer 28 und den Druckmittelausgang 21 gelangt von der Druckmittelquelle Druckmittel zum nicht dargestellten Verbraucher.

Ist der Druck im Verbraucher und somit auch in der Druckmittelausgangskammer 28 soweit angestiegen, daß der dem entgegengerichtet auf den Membrankolben 13, 14, 16 einwirkenden Steuerdruck entspricht, bewegt sich der Membrankolben 13, 14, 16 nach oben, in Richtung auf die Steuerkammer 12 zu. Die Feder 27 bewirkt dann ein Schließen des Einlaßventils 24, 25. Das Auslaßventil 30, 32, 33 wird von der Feder 27 ebenfalls in der Schließstellung gehalten.

Soll der Druck im Verbraucher abgesenkt werden, so wird der Steuerdruck in der Steuerkammer 12 reduziert. Aufgrund der Druckabsenkung in der Steuerkammer 12 überwiegt jetzt die Kraft des auf den Membrankolben 13, 14, 16 einwirkenden Druckes in der Druckmittelausgangskammer 28. Der Membrankolben 13, 14, 16 wird weiter nach oben verschoben, wodurch der Ventilsitz 32 des Auslaßventils 30, 32, 33 vom Ventil verschlußkörper 30 abgehoben wird. Über das jetzt geöffnete Auslaßventil 30, 32, 33, das Entlüftungsrohr 10 und den Druckmittelauslaß 17 wird der Druck in der Druckmittelausgangskammer 28 und somit auch der Druck im Verbraucher soweit abgesenkt, bis wieder Gleichgewicht zwischen den auf den Membrankolben einwirkenden, einander entgegenrichteten Kräften hergestellt ist und das Auslaßventil 30, 32, 33 schließt.

Das Entlüftungsrohr 10, welches sowohl am Ventilgehäuse als auch am Ventilstößel 34, 4 elastisch gelagert ist, läßt zwar die Auf- und Abwärtsbewegungen des Membrankolbens 13, 14, 16 zu, dämpft und verhindert jedoch Schwingungen des Membrankolbens 13, 14, 16 und somit auch ein Flattern des Einlaß- und Auslaßventils 24, 25, 29, 30, 32, 33. Es ist selbstverständlich auch möglich, das Rohr selbst elastisch auszubilden und auf eine elastische Lagerung zu verzichten.

Es ist auch möglich, als Mittel zum Dämpfen von Schwingungen des Membrankolbens 13, 14, 16 anstelle des elastisch gelagerten Entlüftungsrohres 10 andere Dämpfungsmittel, wie z.B. Gummi- oder Kunststoffelemente zu verwenden, über welche der Membrankolben zusätzlich zu seiner Einspannstelle mit dem Ventilgehäuse verbunden ist. Das Dämpfungselement kann sowohl im Bereich der Steuerkammer als auch im Bereich der Druckmitteleingangskammer angeordnet sein. Selbstverständlich muß dann das kombinierte Einlaß- und Auslaßventil entsprechend geändert werden. Bei entsprechender Ausbildung des Einlaß- und Auslanventils kann das als Dämpfungselement ausgebildete Entlüftungsrohr 10 als Druckmittelzuführung zum Einlaßventil verwendet werden.

Die Mittel zum Dämpfen der Schwingungen des Kolbens sind auch einsetzbar in Regelventileinrichtungen, die anstelle eines Membrankolbens einen starren Kolben aufweisen, dessen Dichtringe nur geringe Reibung haben.

**Patentansprüche**

1. Ventileinrichtung, insbesondere Regelventil, mit folgenden Merkmalen.
a) in einem Ventilgehäuse ist ein Kolben, insbesondere Membrankolben (13, 14, 16) angeordnet, welcher einerseits vom Druck aus einer Steuerkammer (12) und andererseits vom Druck aus einer Druckmittelausgangskammer (28) beaufschlagbar ist;
b) der Kolben (13, 14, 16) steht mit einer Ventileinrichtung in Wirkverbindung, über welche wahlweise die Druckmittelausgangskammer (28) mit einer Druckmitteleingangskammer (23) oder mit der Atmosphäre verbindbar ist;
gekennzeichnet durch folgende Merkmale:
c) der Kolben (13, 14, 16) weist einen sich in die Druckmittelausgangskammer (28) oder in die· Steuerkammer (12) hinein erstreckenden Stößel (4, 34) auf, in welchem eine mit der Atmosphäre verbundene Ventilkammer (6) angeordnet ist;
d) ein in Bewegungsrichtung des Kolbens verschwenkbares Entlüftungsrohr (10) ist zwischen der Ventilkammer (6) und einem gehäuseseitigen Entlüftungsauslaß (17) angeordnet,
e) das Entlüftungsrohr (10) ist derart ausgebildet und/oder mit dem Stößel (4, 34) und dem Ventilgehäuse (3, 15) verbunden, daß es schwingungsdämpfend auf den Kolben (13, 14, 16) wirkt.
2. Ventileinrichtung nach Anspruch 1, gekennzeichnet durch folgende Merkmale:
a) In der Ventilkammer (6, 32, 33) ist ein erster Ventilverschlußkörper (30) angeordnet, welcher mit einem ersten Ventilsitz (32) ein erstes Ventil (30, 32, 33) bildet;
b) es ist ein zweiter Ventilsitz (25) vorgesehen, welcher mit einem zweiten Ventilverschlußkörper (24) ein zweites Ventil (24, 25) bildet;
c) das zweite Ventil (24, 25) steht mit dem Kolben (13, 14, 16) in Wirkverbindung;
d) die Ventilkammer (6, 32, 33) des ersten Ventils (32, 33, 30) steht über das Entlüftungsrohr (10) mit einem Druckmittelanschluß (17) in Verbindung,
e) das eine Ende des Entlüftungsrohres (10) ist in oder an der Ventilkammer (6, 32, 33) gelagert;
f) das andere Ende des Entlüftungsrohres (10) ist im oder am Druckmittelanschluß (17) gelagert.
3. Ventileinrichtung nach Anspruch 2, dadurch gekennzeichnet, daß das Rohr (10) an wenigstens einem Ende elastisch gelagert ist. . ,
4. Ventileinrichtung nach Anspruch 2 oder 3, dadurch gekennzeichnet, daß das Rohr (10) elastisch ausgebildet ist.
5. Ventileinrichtung nach Anspruch 2, gekennzeichnet durch folgende Merkmale:
a) Der Druckmittelanschluß (17) führt zur Atmosphäre;
b) das erste Ventil (32, 33, 30) dient als Auslaßventil, über welches die Druckmittelausgangskammer (28) mit der Atmosphäre verbindbar ist.
6. Ventileinrichtung nach Anspruch 2, gekennzeichnet durch folgende Merkmale:
a) Der Druckmittelanschluß ist als mit einer Druckmittelquelle verbundener Druckmitteleingang ausgebildet; ·
b) das erste Ventil dient als Einlaßventil, über welches die Druckmitteleingangskammer mit der Druckmittelausgangskammer verbindbar ist.
7. Ventileinrichtung nach wenigstens einem der vorhergehenden Ansprüche, dadurch gekennzeichnet, daß das schwingungsdämpfende Entlüftungsrohr aus Gummi besteht.
8. Ventileinrichtung nach wenigstens einem der vorhergehenden Ansprüche, dadurch gekennzeichnet, daß das schwingungsdämpfende Entlüftungsrohr aus Kunststoff besteht.

**Claims**

1. Valve arrangement, especially a control valve, having the following features:
a) arranged in a valve housing is a piston, especially a diaphragm piston (13, 14, 16), which can be subjected on one side to the pressure from a control chamber (12) and on the other side to the pressure from a pressure-medium outlet chamber (28);
b) the piston (13, 14, 16) is in active connection with a valve arrangement by way of which the pressure-medium outlet chamber (28) can be connected either to a pressure-medium inlet chamber (23) or to the atmosphere; characterised by the following features:
c) the piston (13, 14, 16) has a tappet (4, 34) which extends into the pressure-medium outlet chamber (28) or into the control chamber (12) and in which there is arranged a valve chamber (6) connected to the atmosphere;
d) a venting pipe (10) that is pivotable in the direction of movement of the piston is arranged between the valve chamber (6) and a venting outlet (17) on the housing side;
e) the venting pipe (10) is so designed and/or is connected in such a manner to the tappet (4, 34) and the valve housing (3, 15) that it has a vibration-damping effect on the piston (13, 14, 16).
2. Valve arrangement according to claim 1, characterised by the following features:
a) arranged in the valve chamber (6, 32, 33) is a first valve-closure member (30) which together with a first valve seat (32) forms a first valve (30, 32, 33);
b) a second valve seat (25) is provided which together with a second valve-closure member (24) formsa second valve (24, 25);
c) the second valve (24, 25) is in active connection with the piston (13, 14, 16);

d) the valve chamber (6, 32, 33) of the first valve (32, 33, 30) is connected by way of the venting pipe (10) to a pressure-medium connection (l7);

e) one end of the venting pipe (10) is mounted in or on the valve chamber (6, 32, 33);

f) the other end of the venting pipe (10) is mounted in or on the pressure-medium connection (17)'.

3. Valve arrangement according to claim 2, characterised in that the pipe (10) is mounted resiliently at at least one end.

4. Valve arrangement according to claim 2 or 3, characterised in that the pipe (10) is of resilient construction.

5. Valve arrangement according to claim 2, characterised by the following features:

a) the pressure-medium connection (17) leads to the atmosphere;

b) the first valve (32, 33, 30) serves as an outlet valve by way of which the pressure-medium outlet chamber (28) can be connected to the atmosphere.

6. Valve arrangement according to claim 2, characterised by the following features:

a) the pressure-medium connection is designed as a pressure-medium inlet connected to a pressure-medium source;

b) the first valve serves as an inlet valve by way of which the pressure-medium inlet chamber can be connected to the pressure-medium outlet chamber.

7. Valve arrangement according to at least one of the preceding claims, characterised in that the vibration-damping venting pipe is made of rubber.

8. Valve arrangement according to at least one of the preceding claims, characterised in that the vibration-damping venting pipe is made of plastics material.


**Revendications**

1. Dispositif de soupape, en particulier soupape régulatrice, présentant les particularités suivantes:

a) un corps de soupape contient un piston, en particulier un piston à membrane (13, 14, 16), qui peut être soumis d'un côté à la pression d'une chambre de commande (12) et de l'autre côté à la pression d'une chambre de sortie du fluide de pression (28)

b) le piston (13, 14, 16) est en liaison fonctionnelle avec un dispositif au moyen duquel la chambre de sortie du fluide de pression (28) peut être reliée sélectivement à une chambre d'entrée du fluide de pression (23) ou à l'atmosphère

caractérisé en ce que

c) le piston (13, 14, 16) présente un poussoir (4, 34) pénétrant dans la chambre de sortie du fluide de pression (28) ou dans la chambre de commande (12) et dans lequel est ménagée une chambre de soupape (6) reliée à l'atmosphère;

d) un tube de sortie d'air (10) est disposé pivotant dans le sens du mouvement du piston entre la chambre de soupape (6) et un orifice de sortie d'air (17) du corps de soupape;

e) le tube de sortie d'air (10) est réalisé et/ou est relié au poussoir (4, 34) et au corps de soupape (3, 15), de manière qu'il exerce un effet amortisseur de vibrations sur le piston (13, 14, 16).

2. Dispositif de soupape selon la revendication 1,

caractérisé en ce que

a) la chambre de soupape (6, 32, 33) contient un premier clapet (30) formant avec un siège (32) une première soupape (30, 32, 33)

b) un deuxième siège (25) et un deuxième clapet (24) forment une deuxième soupape (24, 25)

c) la deuxième soupape (24, 25) est en liaison fonctionnelle avec le piston (13, 14, 16)

d) la chambre de soupape (6, 32, 33) de la première soupape (32, 33, 30) communique à travers le tube de sortie d'air (10) avec un orifice de raccordement (17) pour le fluide de pression;

e) l'une des extrémité du tube de sortie d'air est montée dans ou sur la chambre de soupape (6, 32, 33)

f) l'autre extrémité du tube de sortie d'air (10) est montée dans ou sur l'orifice de raccordement (17) pour le fluide de pression.

3. Dispositif de soupape selon la revendication 2, caractérisé en ce que le tube (10) est monté élastiquement à au moins une extrémité.

4. Dispositif de soupape selon la revendication 2 ou 3, caractérisé en ce que le tube (10) est élastique.

5. Dispositif de soupape selon la revendication 2, caractérisé en ce que

a) l'orifice de raccordement (17) pour le fluide de pression mène à l'atmosphère;

b) la première soupape (32, 33, 30) sert de soupape d'échappement, par laquelle la chambre de sortie pour le fluide de pression (28) peut être reliée à l'atmosphère.

6. Dispositif de soupape selon la revendication 2, caracterise en ce que

a) l'orifice de raccordement pour le fluide de pression est réalisé comme une entrée de fluide de pression raccordée à une source de fluide de pression;

b) la première soupape sert de soupape d'admission, par laquelle la chambre d'entrée du fluide de pression peut être reliée à la chambre de sortie du fluide de pression.

7. Dispositif de soupape selon au moins une des revendications précédentes, caractérisé en ce que le tube de sortie d'air, agissant comme un amortisseur de vibrations, est en caoutchouc.

8. Dispositif de soupape selon au moins une des revendications précédentes, caractérisé en ce que le tube de sortie d'air, agissant comme un amortisseur de vibrations, est en matière plastique.